# EUROPEAN PATENT SPECIFICATION

(11) **EP 4 259 494 B1**
(45) Date of publication and mention of the grant of the patent: **07.10.2026**
(21) Application number: 21835392.8
(22) Date of filing: 10.12.2021
(51) Int. Cl.: B60T 7/04, B60T 8/172, B60T 13/66

(54) **A METHOD FOR CONTROLLING THE DECELERATION OF A VEHICLE AND A BRAKING SYSTEM**
VERFAHREN ZUR STEUERUNG DER VERZÖGERUNG EINES FAHRZEUGS UND BREMSSYSTEM
PROCÉDÉ DE COMMANDE DE LA DÉCÉLÉRATION D'UN VÉHICULE ET UN SYSTÈME DE FREINAGE

(30) Priority: 10.12.2020 IT 202000030368
(43) Date of publication of application: 18.10.2023
(73) Proprietor: Brembo S.p.A., 24035 Curno (Bergamo) (IT)
(72) Inventor: GALIZZI, Valerio, 24035 CURNO, BERGAMO (IT); TRUFFELLO, Martina, 24035 CURNO, BERGAMO (IT); DOZZI, Francesco, 24035 CURNO, BERGAMO (IT); UGOLINI, Luca, 24035 CURNO, BERGAMO (IT); FORNI, Fabrizio, 24035 CURNO, BERGAMO (IT); PAOLINI, Davide, 24035 CURNO, BERGAMO (IT)
(74) Representative: Crippa, Paolo Ernesto
(86) International application number: PCT/IB2021/061545
(87) International publication number: WO 2022/123503

(56) References cited:
- EP-A2- 2 460 701
- DE-A1- 102018 202 737
- GB-A- 2 580 710
- US-A1- 2011 130 935

## Description

### . Field of the invention

**.** The present invention relates to a method for controlling the deceleration of a vehicle and a braking system for implementing said method.

### . Background art

**.** As known, braking systems allow decelerating a vehicle. Braking systems are activated by a vehicle user, usually by actuating a lever. The response of the braking system to the actuation of the lever varies according to the conditions at the vehicle contour, i.e. on the speed thereof, on the state of the road surface, on the conditions of the engine and the wheels. For example, at high vehicle speeds, the response of the braking system on actuation of the lever is often poorly responsive, whereas, on the contrary, at low speeds, it is often too responsive, causing uncomfortable driving conditions or situations of danger for the vehicle user or for road users.

**.** To overcome such drawback, solutions are known in which the braking system is provided with a control unit, which modulates the activation of the braking system according to the position of the actuation lever correlated to the speed of the vehicle. For example, a system of this type is known from documents EP1108632B1**.**

**.** To overcome such drawback, other solutions, known, for example, from documents US20140067222A1**,** US20140136069A1 and EP1324903**,** teach selecting a braking mode a priori and modulating the activation of the braking system according to the selected braking mode and the position of the actuation lever.

**.** Although such solutions of the known type overcome some drawbacks, the braking response might be too prompt and not very comfortable with slow actuations of the actuation lever, or it could be poorly reactive with impulsive actuations of the actuation lever.

**.** Moreover, such solutions are poorly resilient and poorly adaptable to sudden changes in the driving conditions.

The document EP2460701A2 discloses a brake control system for an electrically driven vehicle which aims to compensate for tolerances in the brake system components to achieve a comfortable brake feel. Specifically, this document describes a method wherein a target deceleration characteristic is adjusted from a theoretical characteristic. This adjustment is performed by detecting the brake pedal stroke position at which pressure in a master cylinder actually begins to be generated, thereby compensating for mechanical play in the system. While this solution mentions in paragraph [0052] that the brake pedal depressing velocity "may preferably be incorporated" in the preparation of the target deceleration characteristic map, its role is described in paragraph [0056] as a correction factor to an already determined target deceleration. The method of this solution is therefore inherently sequential: first, a base deceleration map is established and corrected for mechanical tolerances, and only subsequently this map can be further adjusted based on the pedal speed. This approach, however, does not address the technical problem of creating a braking response that dynamically adapts in real-time to the driver's intention. The system of this solution is designed to solve a problem of mechanical consistency, but it remains limited in its ability to distinguish between a driver's desire for a gradual, comfortable stop and an urgent, panic brake. D1's teaching would lead a skilled person to refine the correction algorithms, but not to fundamentally change the control architecture to one where lever position and lever speed are used as simultaneous and co-essential primary inputs for the real-time generation of the entire deceleration curve.

**.** Therefore, the need is strongly felt to customize the deceleration of the vehicle according to a plurality of vehicle driving conditions.

**.** Furthermore, the need is strongly felt to control the deceleration of the vehicle in a more reliable manner than that known.

**.** Therefore, the problem underlying the present invention is to conceive a method for controlling the deceleration of a vehicle and a braking system adapted to implement such method, having such structural and functional features as to satisfy the aforesaid needs and simultaneously overcome the stated drawbacks with reference to the prior art and meet the aforesaid needs.

### . Solution

**.** The objective of the present invention is to provide a method for controlling the deceleration of a vehicle and a braking system adapted to implement such method.

**.** This and other objects and advantages are achieved with a method according to claim 1, and a braking system according to claim 15.

**.** Some advantageous embodiments are the subject of the dependent claims.

**.** From an analysis of this solution, it emerged how the suggested solution allows improving the control of the deceleration with respect to what is known, ensuring decelerations adapted to a plurality of vehicle movement conditions.

### . Drawings

**.** Further features and advantages of the method for controlling the deceleration of a vehicle and the braking system will become apparent from the description provided below of preferred embodiments thereof, given by way of non-limiting example, with reference to the accompanying drawings, in which:

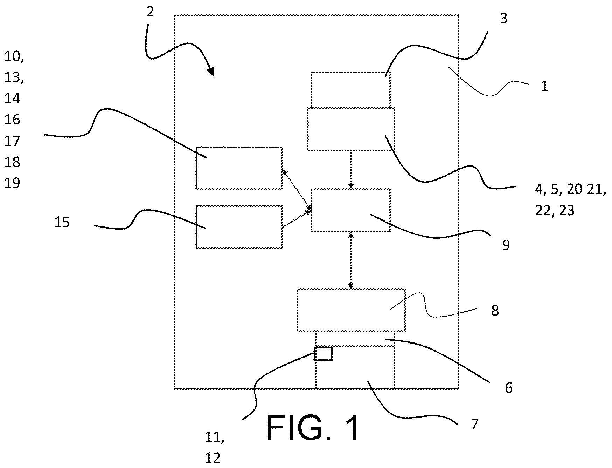

- figure 1 is a diagram of a braking system of a vehicle according to the present invention;

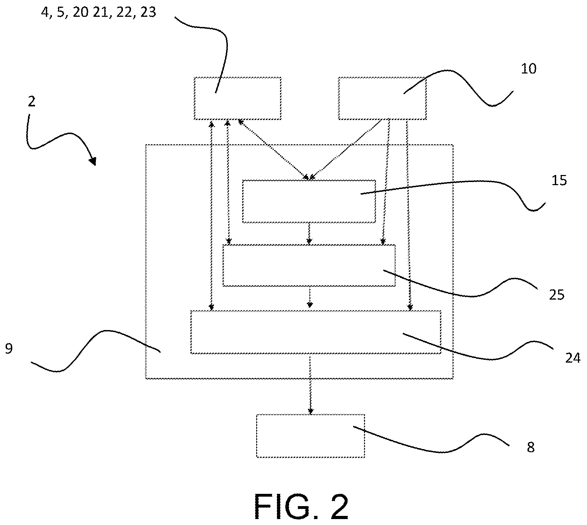

- figure 2 is an implementation flow diagram of a method for controlling deceleration according to the present invention;

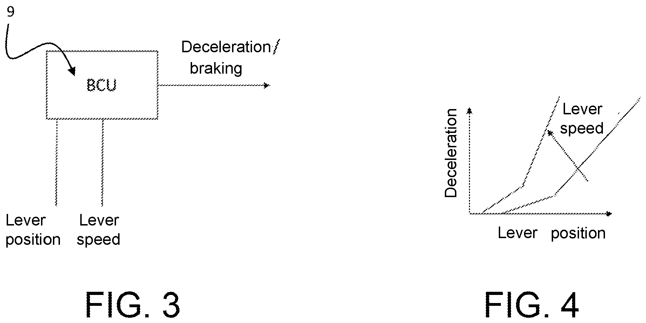

- figure 3 is a general flow diagram of a plurality of signals processed by a control unit to provide a deceleration curve according to the method for controlling deceleration of the present invention,
- figure 4 is a general deceleration curve generated by the control unit in figure 3,

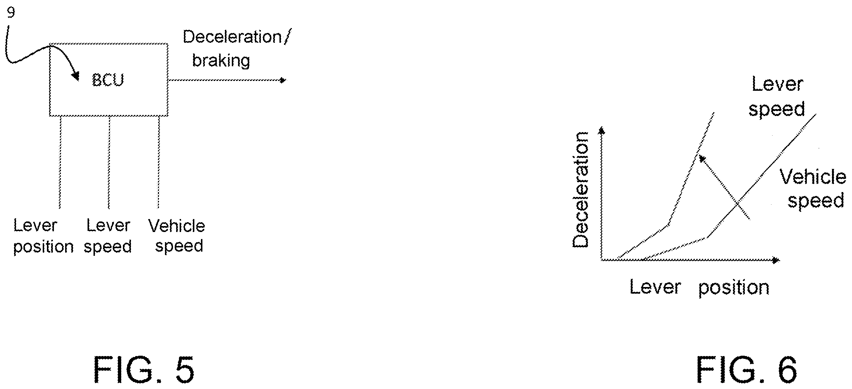

- figure 5 is a first flow diagram of a plurality of signals processed by a control unit to provide a deceleration curve according to an operating mode of the method
- figure 6 is a deceleration curve generated by the control unit in figure 5,

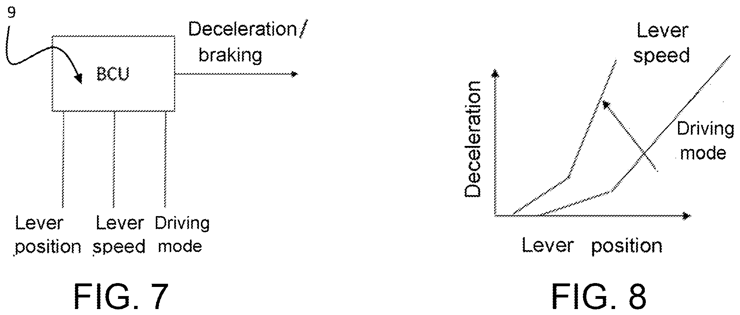

- figure 7 is a second flow diagram of a plurality of signals processed by a control unit to provide a deceleration curve according to a further operating mode of the method,
- figure 8 is a deceleration curve generated by the control unit in figure 7,

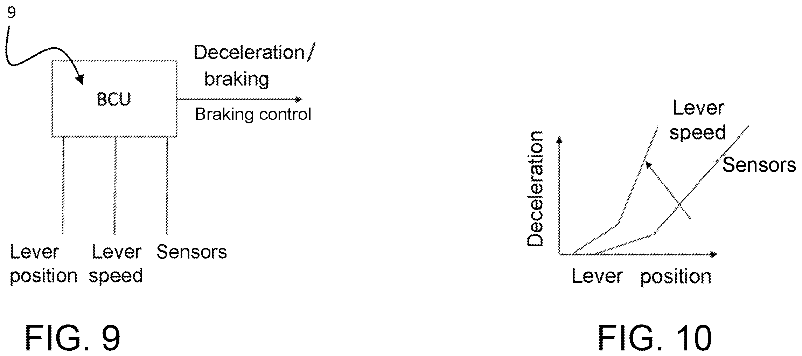

- figure 9 is a third flow diagram of a plurality of signals processed by a control unit to provide a deceleration curve according to a further operating mode of the method,
- figure 10 is a deceleration curve generated by the control unit in figure 9,

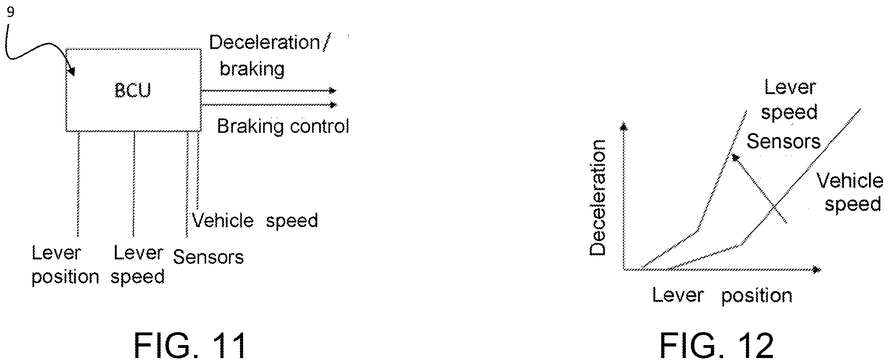

- figure 11 is a fourth flow diagram of a plurality of signals processed by a control unit to provide a deceleration curve according to a further operating mode of the method,
- figure 12 is a deceleration curve generated by the control unit in figure 11
- figure 13 shows three different deceleration curves as a function of the lever position, different vehicle speeds, different lever actuation speeds and different driving modes.

### . Description of some preferred embodiments

**.** According to a general operating mode, a method is described for controlling the deceleration of a vehicle 1, wherein said vehicle 1 comprises a braking system 2, wherein said braking system 2 comprises at least one braking actuation lever 3, a braking actuator 8 and at least one braking device 6.

**.** Said method comprises step a- measuring the current lever position s(t) of said lever 3 and the current lever speed ds(t)/dt of said lever 3.

**.** Said method comprises step b- dynamically mapping said current lever position st and said lever actuation speed (ds(t)/dt).

**.** Said method comprises step c- processing a deceleration curve as a function of the dynamic mapping in step b.

**.** Said method comprises step d- decelerating said vehicle (1) according to said deceleration curve for each current lever position st) measured in a lever stroke.

**.** According to an operating mode, said step b- is carried out at the same time as said step a-.

**.** According to an operating mode, said step b- comprises defining a law and/or curve and/or equation, which establishes a relation between a deceleration requested for said vehicle and the lever position, or current lever position s(t), and establishes a correction function of said relation, wherein said correction function depends on the lever actuation speed ds(t)/dt.

**.** According to an operating mode, said step b- comprises defining said relation with a polynomial function of the current lever position s(t).

**.** According to an operating mode, said step b- comprises defining said correction function as a correction factor multiplied by the lever actuation speed ds(t)/dt.

**.** According to an operating mode, said step b- comprises defining said relation and said correction function continuously, for each instant of time.

**.** According to an operating mode, said step b- comprises defining said relation and said correction function for specific intervals of time.

**.** According to an operating mode, said method comprises a step e- prior to step a-, selecting a driving mode selected from a plurality of driving modes.

**.** According to an operating mode, step c- comprises sub-step f- modifying said deceleration curve as a function of the driving mode selected in step e-.

**.** According to an operating mode, said plurality of driving modes comprises at least one parking mode and/or a traffic driving mode and/or a sporty driving mode and/or a normal driving mode and/or a snow driving mode and/or an ice driving mode and/or a city driving mode and/or a mud driving mode and/or a sand driving mode and/or a customizable driving mode.

. According to an operating mode, said step e- occurs by means of a driving mode selector 15 of said vehicle 1 operatively connected to said braking system 2.

**.** According to an operating mode, said step e- occurs by means of the selection of a vehicle 1 user.

**.** According to an operating mode, said step e- occurs by means of the automatic processing of a control unit 9.

**.** According to an operating mode, said method comprises a step g- carried out at least overlapping said step a- measuring at least one vehicle variable selected from a plurality of vehicle variables.

**.** According to an operating mode, said method comprises a step h- carried out at least parallel to said step b-, processing an estimate of the vehicle dynamics as a function of said at least one vehicle variable measured in step g-.

**.** According to an operating mode, in said step h-, said estimate of the vehicle dynamics comprises estimating the grip of the vehicle, and/or the tire inflation and/or the generation of friction of the braking system.

**.** According to an operating mode, said method comprises a step i- modifying said deceleration curve as a function of the estimate of the vehicle dynamics in step h-.

**.** According to an operating mode, said plurality of vehicle variables comprises at least one variable related to the grip of the vehicle, e.g. calculated by evaluating the relation between the ground forces and the weight force at defined slip gradient thresholds and/or one variable related to a tire inflation pressure associated with a wheel 7 of said vehicle 1 and/or one variable related to the temperature of said braking system 2.

**.** According to an operating mode, said method comprises a step l- parallel to step c-, selecting a braking actuation mode available from a plurality of braking actuation modes as a function of the dynamic mapping in step b-.

**.** According to an operating mode, said method comprises a step m- carried out at the same time as step d-, actuating said at least one braking device 6 according to said selected braking actuation mode

**.** According to an operating mode, step l- comprises sub-step n- modifying said braking actuation mode selected as a function of the estimate of the vehicle dynamics in step h-.

**.** According to an operating mode, said plurality of braking actuation modes comprises at least one quick braking actuation mode and/or one slow braking actuation mode and/or one normal braking mode and/or one noisy braking mode and/or one programmable braking mode.

**.** According to an operating mode, said method comprises a step o- detecting the vehicle speed Vv.

**.** According to an operating mode, step c- comprises sub-step p- modifying said deceleration curve as a function of the vehicle speed detected in step o-.

**.** According to an operating mode, said method comprises a step q- parallel to step c-, selecting a braking actuation control mode from a plurality of braking actuation control modes as a function of the dynamic mapping in step b-.

**.** According to an operating mode, said method comprises a step r- carried out at the same time as step d-, controlling said at least one braking device 6 according to said braking actuation mode selected in step q.

**.** According to an operating mode, step q- comprises sub-step s- modifying said braking actuation control mode selected as a function of the estimate of the vehicle dynamics in step h-.

**.** According to an operating mode, step q- comprises sub-step t- modifying said braking actuation control mode selected as a function of the vehicle speed detected in step o-.

**.** According to an operating mode, said lever 3 is movable by a maximum stroke comprised between a resting position and a stroke-end position.

**.** According to an operating mode, said plurality of braking actuation control modes comprises at least one performance braking actuation control mode and/or one comfort braking control mode and/or one abs braking control mode and/or one noisy braking control mode and/or one pulling over braking control mode.

**.** According to an operating mode, said deceleration curve is an increasing function with respect to said current lever position s(t).

**.** According to an operating mode, said deceleration curve is increasing monotonic.

**.** According to an operating mode, said deceleration curve has an inflection.

**.** According to an operating mode, said deceleration curve comprises a maximum at the lever end-of-stroke position.

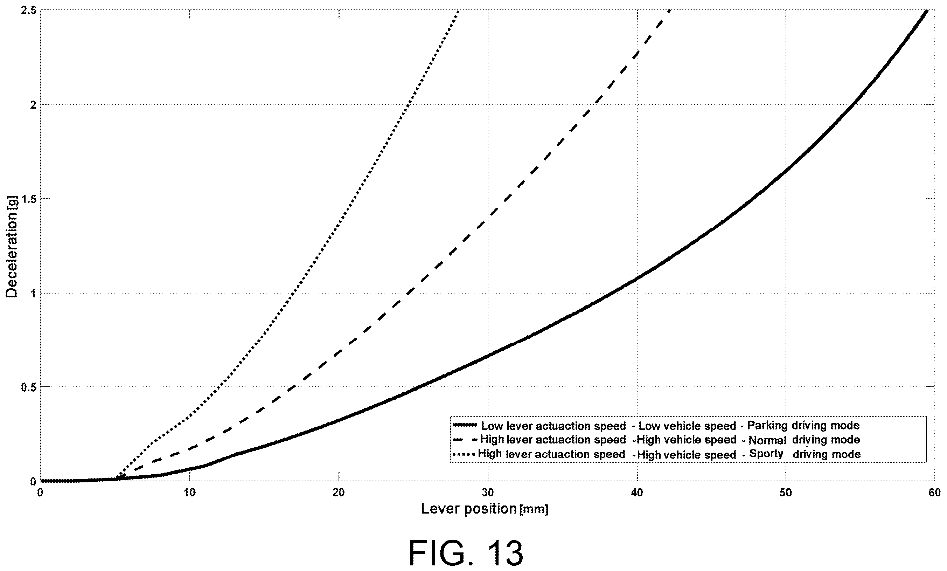

**.** Three different deceleration curves can be observed in figure 13 as a function of the lever position, according to three different driving modes, parking, normal, sporty, and according to different lever actuation speeds and different vehicle speeds.

**.** The present invention also relates to a braking system generally denoted with reference numeral 2.

**.** Said braking system 2 comprises a braking actuation lever 3, a lever position sensor 4 configured to detect at least one current lever position s(t) of said braking actuation lever 3, a lever speed sensor 5 configured to detect at least one current lever speed ds(t)/dt of said braking actuation lever 3.

**.** Said braking system 2 comprises at least one braking device 6 associated with a respective wheel 7 of said vehicle 1.

**.** Said braking system 2 comprises a braking actuator 8 operatively connected to each braking device 6 and configured to actuate said braking device 6.

**.** Said braking system 2 comprises at least one control unit 9 operatively connected to said lever position sensor 4, said lever speed sensor 5, and said braking actuator 8.

**.** Said at least one control unit 9 is configured to dynamically map said current pedal position st and said current pedal speed ds(t)/dt in a lever stroke.

**.** Advantageously, said at least one control unit 9 is configured to process a deceleration curve as a function of said dynamic mapping with which said vehicle 1 is to be decelerated.

**.** According to an embodiment, said braking system 2 comprises a braking actuation mode selector 25 operatively connected to said at least one control unit 9, said braking actuation mode selector 25 being configured to select a braking actuation mode from a plurality of braking actuation modes available from said control unit. According to an embodiment, said at least one control unit 9 is configured to select a braking actuation mode from a plurality of braking actuation modes.

**.** According to an embodiment, said at least one control unit 9 is configured to select said braking actuation mode on the basis of a plurality of inputs.

**.** According to an embodiment, said at least one control unit 9 is configured to control said braking actuator 8 according to said selected braking actuation mode.

**.** According to an embodiment, said at least one control unit 9 is configured to select a braking actuation mode from a plurality of braking actuation control modes.

**.** According to an embodiment, said braking system 2 comprises a braking actuation control mode selector 24 operatively connected to said at least one control unit 9, said braking actuation control mode selector 24 being configured to select a braking actuation mode from a plurality of braking actuation modes.

**.** According to an embodiment, said at least one control unit 9 is configured to control said braking actuator 8 according to said selected braking actuation control mode.

**.** According to an embodiment, said braking system 2 comprises a driving mode selector 15 configured to select a driving mode from a plurality of driving modes, wherein said driving mode selector 15 is operatively associated with said at least one control unit 9, and wherein said at least one control unit 9 is configured to modify said deceleration curve as a function of said selected driving mode.

**.** According to an embodiment, said braking system 2 comprises at least one vehicle dynamics variable measurement sensor 10 comprised from:
- a wheel speed sensor 11 for each wheel 7 of said vehicle 1, wherein said wheel speed sensor 11 is configured to detect the rotation speed of the corresponding wheel 7, wherein said speed sensor 11 is operatively associated with said at least one control unit 9,
- at least one tire pressure sensor 12 configured to measure an inflation pressure of a tire associated with each wheel 7, wherein said at least one tire pressure sensor 12 is operatively associated with said at least one control unit 9,
- at least one accelerometer 13 configured to measure at least one vehicle acceleration to which said vehicle 1 is subjected, wherein said at least one accelerometer 13 is operatively associated with said at least one control unit 9,
- at least one gyroscope 14 configured to measure at least one angular vehicle speed to which said vehicle 1 is subjected, wherein said at least one gyroscope 14 is operatively associated with said at least one control unit 9,
- at least one vehicle speed sensor 16 configured to measure a current vehicle speed, wherein said vehicle speed sensor 16 is operatively associated with said at least one control unit 9,
- at least one proximity sensor 17 configured to measure the distance between the vehicle and an obstacle, wherein said at least one proximity sensor 17 is operatively associated with said at least one control unit 9,
- at least one humidity detection sensor 18 operatively connected to said at least one control unit 9,
- at least one rainfall sensor 19 configured to detect the presence and measure the amount of incident rain on the vehicle 1, wherein said at least one rainfall sensor 19 is operatively associated with said at least one control unit 9.

**.** According to an embodiment, said at least one control unit 9 is configured to process an estimate of the vehicle dynamics as a function of said at least one vehicle variable.

**.** According to an embodiment, said at least one control unit 9 is configured to process said driving mode as a function of said at least one vehicle variable.

**.** According to an embodiment, said braking system 2 comprises at least one lever sensor associated with said lever 3, comprised from:
- a lever switch sensor 20 configured to detect a contact of a user with said lever 3,
- a lever stroke sensor 21 configured to measure a stroke of said lever 3,
- a lever pressure sensor configured to measure a contact pressure with which a user contacts said lever 3,
- a lever force sensor configured to measure a force with which a user actuates said lever 3.

**.** According to an embodiment, said at least one lever sensor is associated with said lever 3 and is operatively connected to said control unit 9.

**.** According to an embodiment, said control unit 9 is configured to send to said at least one braking actuator 8 a signal representing said deceleration curve and/or said braking actuation control mode and/or said braking actuation mode, wherein said signal is a voltage and current signal.

**.** According to an embodiment, said braking actuator 8 comprises a respective control and calibration unit 20 configured to process said signal sent from said control unit 9 and to control said braking device 6 with a processed signal.

### LIST OF REFERENCES

- 1: vehicle
- 2: braking system
- 3: braking actuation lever
- 4: lever position sensor
- 5: lever speed sensor
- 6: braking device
- 7: wheel
- 8: braking actuator
- 9: control unit
- 10: vehicle dynamics variable measurement sensor
- 11: wheel speed sensor
- 12: tire pressure sensor
- 13: accelerometer
- 14: gyroscope
- 15: selector
- 16: vehicle speed sensor
- 17: proximity sensor
- 18: humidity detection sensor
- 19: rainfall sensor
- 20: lever switch sensor
- 21: lever stroke sensor
- 22: lever pressure sensor
- 23: lever force sensor
- 24: braking actuation control mode selector
- 25: braking actuation mode selector

## Claims

1. A method for controlling the deceleration of a vehicle (1), wherein said vehicle (1) comprises a braking system (2), wherein said braking system (2) comprises at least one braking actuation lever (3), a braking actuator (8), and at least one braking device (6), wherein said method comprises the following steps:
a- measuring the current lever position (s(t)) of said lever (3) and the current lever speed (ds(t)/dt) of said lever (3),
b- dynamically mapping said current lever position (s(t)) and said lever actuation speed (ds(t)/dt),
c- processing a deceleration curve as a function of the dynamic mapping in step b-
d- decelerating said vehicle (1) according to said deceleration curve for each current lever position (s(t)) measured in a lever stroke wherein said step b- is carried out simultaneously with step a-.

2. A method according to the preceding claim, wherein said method comprises
e- before step a-, selecting a driving mode selected from a plurality of driving modes,
and wherein step c- comprises the sub-step:
f- modifying said deceleration curve as a function of the driving mode selected in step e-.

3. A method according to the preceding claim, wherein said plurality of driving modes comprises at least one parking mode and/or a traffic driving mode and/or a sporty driving mode and/or a normal driving mode and/or a snow driving mode and/or an ice driving mode and/or a city driving mode and/or a mud driving mode and/or a sand driving mode and/or a customizable driving mode,
and/or wherein said step **e-** occurs by means of a driving mode selector (15) of said vehicle (1) operatively connected to said braking system (2).

4. A method according to any one of the preceding claims,
wherein said method comprises the further steps:
**g-** at least overlapping said step **a-** measuring at least one vehicle variable selected from a plurality of vehicle variables,
**h-** at least overlapping said step **b-,** processing an estimate of the vehicle dynamics as a function of said at least one vehicle variable measured,
and wherein step **c-** comprises the sub-step:
i- modifying said deceleration curve as a function of the estimate of the vehicle dynamics in step h-.

5. A method according to the preceding claim, wherein
said plurality of vehicle variables comprises at least one variable related to the grip of the vehicle and/or one variable related to a tire inflation pressure associated with a wheel (7) of said vehicle (1) and/or one variable related to the temperature of said braking system (2).

6. A method according to any one of the preceding claims, wherein said lever (3) is movable by a maximum stroke between a rest position and a stroke-end position, and/or wherein said deceleration curve is an increasing monotonic function with respect to said current lever position (s(t)), and/or wherein said deceleration curve comprises a maximum at the lever stroke-end position.

7. A method according to any one of the preceding claims, comprising the further steps:
l- parallel to step c-, selecting a braking actuation mode available from a plurality of braking actuation modes as a function of the dynamic mapping in step b-,
m- simultaneously with step d-, actuating said at least one braking device (6) according to said braking actuation mode selected.

8. A method according to the preceding claim and to claim 4, wherein step l- comprises the sub-step:
i- modifying said braking actuation mode selected as a function of the estimate of the vehicle dynamics in step h-.

9. A method according to claim 7, wherein said plurality of braking actuation modes comprises at least one quick braking actuation mode and/or one slow braking actuation mode and/or one normal braking mode and/or one noisy braking mode and/or one programmable braking mode.

10. A method according to claim 1, comprising the further step:
o- detecting the vehicle speed (Vv),
and wherein step c- comprises the sub-step of
p-modifying said deceleration curve as a function of the vehicle speed detected in step o-.

11. A method according to any one of the preceding claims, comprising
q- parallel to step c-, selecting a braking actuation control mode from a plurality of braking actuation control modes as a function of the dynamic mapping in step b-, and
r- simultaneously with step d-, controlling said at least one braking device (6) according to said braking actuation control mode. selected

12. A method according to the preceding claim and to claim 4, wherein step q- comprises the sub-step
s- modifying said braking actuation control mode selected as a function of the estimate of the vehicle dynamics in step h-.

13. A method according to claim 11 and claim 10, wherein step q-comprises the sub-step:
t- modifying said braking actuation control mode selected as a function of the vehicle speed detected in step **e-.**

14. A method according to claim 10, wherein said plurality of braking actuation control modes comprises at least one performance braking actuation control mode and/or one comfort braking control mode and/or one abs braking control mode and/or one noisy braking control mode and/or one pulling over braking control mode.

15. A braking system (2) of a vehicle (1), comprising a braking actuation lever (3),
a lever position sensor (4) configured to detect at least one current lever position (s(t)) of said braking actuation lever (3),
a lever speed sensor (5) configured to detect at least one current lever speed (ds(t)/dt) of said braking actuation lever (3),
at least one braking device (6) associated with a respective wheel (7) of said vehicle (1),
a braking actuator (8) operatively connected to each braking device (6) and configured to actuate said braking device (6),
at least one control unit (9) operatively connected to said lever position sensor (4), said lever speed sensor (5), and said braking actuator (8),
wherein said at least one control unit (9) is configured to dynamically map said current lever position (s(t)) and said current lever
speed (ds(t)/dt) in a lever stroke, simultaneously with the detection of the current lever position (s(t)) and the detection of the current lever speed (ds(t)/dt),
wherein said at least one control unit (9) is configured to process a deceleration curve as a function of said dynamic mapping with which said vehicle (1) is to be decelerated.

16. A braking system (2) according to the preceding claim, wherein said at least one control unit (9) is configured to select a braking actuation mode from a plurality of braking actuation modes, wherein said at least one control unit (9) is configured to control said braking actuator (8) according to said braking actuation mode selected,
and/or wherein said at least one control unit (9) is configured to select a braking actuation control mode from a plurality of braking actuation control modes, wherein said at least one control unit (9) is configured to control said braking actuator (8) according to said braking actuation control mode selected,
and/or wherein said braking system (2) comprises
- a driving mode selector (15) configured to select a driving mode from a plurality of driving modes, wherein said driving mode selector (15) is operatively associated with said at least one control unit (9), and wherein said at least one control unit (9) is configured to modify said deceleration curve as a function of said driving mode selected.

17. A braking system (2) according to any one of claims 15 to 16, comprising at least one vehicle dynamics variable measurement sensor (10) included between
- a wheel speed sensor (11) for each wheel (7) of said vehicle (1), wherein said wheel speed sensor (11) is configured to detect the rotation speed of the corresponding wheel (7), wherein said speed sensor (11) is operatively associated with said at least one control unit (9), and/or
- at least one tire pressure sensor (12) configured to measure an inflation pressure of a tire associated with said wheel (7), wherein said at least one tire pressure sensor (12) is operatively associated with said at least one control unit (9), and/or
- at least one accelerometer (13) configured to measure at least one vehicle acceleration to which said vehicle (1) is subjected, wherein said at least one accelerometer (13) is operatively associated with said at least one control unit (9),
- at least one gyroscope (14) configured to measure at least one angular vehicle speed to which said vehicle (1) is subjected, wherein said at least one gyroscope (14) is operatively associated with said at least one control unit (9),
- at least one vehicle speed sensor (16) configured to measure a current vehicle speed, wherein said vehicle speed sensor (16) is operatively associated with said at least one control unit (9),
- at least one proximity sensor (17) configured to measure the distance between the vehicle and an obstacle, wherein said at least one proximity sensor (17) is operatively associated with said at least one control unit (9),
- at least one humidity detection sensor (18) operatively connected to said at least one control unit (9),
- at least one rainfall sensor (19) configured to detect the presence and measure the amount of incident rain on the vehicle (1), wherein said at least one rainfall sensor (19) is operatively associated with said at least one control unit (9).

18. A braking system (2) according to the preceding claim, wherein said at least one control unit (9) is configured to process an estimate of the vehicle dynamics as a function of said at least one vehicle variable, and/or wherein
said at least one control unit (9) è configured to process said driving mode as a function of said at least one vehicle variable.

19. A braking system (2) according to any one of claims 15 to 18, comprising at least one lever sensor associated with said lever (3) and operatively connected to said control unit (9), wherein said at least one lever sensor is selected from:
a lever switch sensor (20) configured to detect a contact of a user with said lever (3), and/or
a lever stroke sensor (21) configured to measure a stroke of said lever (3), and/or
a lever pressure sensor (22) configured to measure a contact pressure with which a user contacts said lever (3), and/or
a lever force sensor () configured to measure a force with which a user actuates said lever (3); and/or wherein
said control unit (9) is configured to send, to said at least one braking actuator (8), a signal representing said deceleration curve and/or said braking actuation control mode and/or said braking actuation mode, wherein said signal is a voltage and current signal, and/or wherein said braking actuator (8) comprises a respective calibration and control unit configured to process said signal sent by said control unit (9) and to control said braking device (6) with a processed signal.

## Patentansprüche

1. Verfahren zur Steuerung der Verzögerung eines Fahrzeugs (1), wobei das genannte Fahrzeug (1) ein Bremssystem (2) umfasst, wobei das genannte Bremssystem (2) mindestens einen Bremsbetätigungshebel (3), einen Bremsaktuator (8) und mindestens eine Bremsvorrichtung (6) umfasst, wobei das genannte Verfahren die folgenden Schritte umfasst:
a- Messung der aktuellen Hebelposition (s(t)) des genannten Hebels (3) und der aktuellen Hebelgeschwindigkeit (ds(t)/dt) des genannten Hebels (3),
b- dynamisches Mapping der genannten aktuellen Hebelposition (s(t)) und der genannten Hebelbetätigungsgeschwindigkeit (ds(t)/dt),
c- Verarbeitung einer Verzögerungskurve in Abhängigkeit von dem dynamischen Mapping in Schritt b-
d- Verzögerung des genannten Fahrzeugs (1) gemäß der genannten Verzögerungskurve für jede aktuelle Hebelposition (s(t)), die bei einem Hebelhub gemessen wird, wobei Schritt b- gleichzeitig mit Schritt a- ausgeführt wird.

2. Verfahren nach dem vorangegangenen Anspruch, wobei das genannte Verfahren Folgendes umfasst
e- vor Schritt a-, Auswahl eines Fahrmodus aus einer Vielzahl von Fahrmodi,
und wobei Schritt c- den folgenden Teilschritt umfasst:
f- Änderung der genannten Verzögerungskurve in Abhängigkeit von dem in Schritt e- gewählten Fahrmodus.

3. Verfahren nach dem vorangegangenen Anspruch, wobei die genannte Vielzahl von Fahrmodi mindestens einen Parkmodus und/oder einen Verkehrsfahrmodus und/oder einen sportlichen Fahrmodus und/oder einen normalen Fahrmodus und/oder einen Schneefahrmodus und/oder einen Eisfahrmodus und/oder einen Stadtfahrmodus und/oder einen Schlammfahrmodus und/oder einen Sandfahrmodus und/oder einen benutzerdefinierbaren Fahrmodus umfasst,
und/oder wobei der genannte Schritt e- mittels eines Fahrmodus-Wahlschalters (15) des genannten Fahrzeugs (1) erfolgt, der operativ mit dem genannten Bremssystem (2) verbunden ist.

4. Verfahren nach einem der vorangegangenen Ansprüche, wobei das genannte Verfahren die folgenden weiteren Schritte umfasst:
g- mindestens den genannten Schritt a- überlappend, Messung mindestens einer Fahrzeugvariablen, die aus einer Vielzahl von Fahrzeugvariablen ausgewählt wird,
h- mindestens den genannten Schritt b- überlappend, Verarbeitung einer Schätzung der Fahrzeugdynamik in Abhängigkeit von der genannten mindestens einen gemessenen Fahrzeugvariablen,
und wobei Schritt c- den folgenden Teilschritt umfasst:
i- Änderung der genannten Verzögerungskurve in Abhängigkeit von der Schätzung der Fahrzeugdynamik in Schritt h-.

5. Verfahren nach dem vorangegangenen Anspruch, wobei die genannte Vielzahl von Fahrzeugvariablen mindestens eine Variable umfasst, die sich auf die Bodenhaftung des Fahrzeugs bezieht, und/oder eine Variable, die sich auf einen mit einem Rad (7) des Fahrzeugs (1) verbundenen Reifendruck bezieht, und/oder eine Variable, die sich auf die Temperatur des genannten Bremssystems (2) bezieht.

6. Verfahren nach einem beliebigen der vorangegangenen Ansprüche, wobei der genannte Hebel (3) mit einem maximalen Hub zwischen einer Ruheposition und einer Hubendposition beweglich ist und/oder wobei die genannte Verzögerungskurve in Bezug auf die genannte aktuelle Hebelposition (s(t)) eine monoton steigende Funktion ist und/oder wobei die genannte Verzögerungskurve ein Maximum an der Hubendposition des Hebels aufweist.

7. Verfahren nach einem beliebigen der vorangegangenen Ansprüche, umfassend die folgenden weiteren Schritte:
l- parallel zu Schritt c-, Auswahl eines Bremsbetätigungsmodus aus einer Vielzahl von Bremsbetätigungsmodi in Abhängigkeit von dem dynamischen Mapping in Schritt b-,
m- gleichzeitig mit Schritt d-, Betätigen der genannten mindestens einen Bremsvorrichtung (6) gemäß dem genannten gewählten Bremsbetätigungsmodus.

8. Verfahren nach dem vorangegangenen Anspruch und nach Anspruch 4, wobei Schritt l- den folgenden Teilschritt umfasst:
i- Änderung des genannten Bremsbetätigungsmodus, der in Abhängigkeit von der Schätzung der Fahrzeugdynamik in Schritt h- ausgewählt wurde.

9. Verfahren nach Anspruch 7, wobei die genannte Vielzahl von Bremsbetätigungsmodi mindestens einen schnellen Bremsbetätigungsmodus und/oder einen langsamen Bremsbetätigungsmodus und/oder einen normalen Bremsmodus und/oder einen geräuschvollen Bremsmodus und/oder einen programmierbaren Bremsmodus umfasst.

10. Verfahren nach Anspruch 1, umfassend den weiteren Schritt:
o- Erfassung der Fahrzeuggeschwindigkeit (Vv),
und wobei Schritt c- den Teilschritt p- Änderung der genannten Verzögerungskurve in Abhängigkeit von der in Schritt o- erfassten Fahrzeuggeschwindigkeit umfasst.

11. Verfahren nach einem beliebigen der vorangegangenen Ansprüche, umfassend
q- parallel zu Schritt c-, Auswahl eines Bremsbetätigungssteuerungsmodus aus einer Vielzahl von Bremsbetätigungssteuerungsmodi in Abhängigkeit von dem dynamischen Mapping in Schritt b-, und
r - gleichzeitig mit Schritt d-, Steuerung der genannten mindestens einen Bremsvorrichtung (6) gemäß dem ausgewählten Bremsbetätigungssteuerungsmodus

12. Verfahren nach dem vorangegangenen Anspruch und nach Anspruch 4, wobei Schritt q- den folgenden Teilschritt umfasst
s- Änderung des genannten Bremsbetätigungssteuerungsmodus, der in Abhängigkeit von der Schätzung der Fahrzeugdynamik in Schritt h- ausgewählt wurde.

13. Verfahren nach Anspruch 11 und Anspruch 10, wobei Schritt q- den folgenden Teilschritt umfasst:
t- Änderung des genannten Bremsbetätigungssteuerungsmodus, der in Abhängigkeit von der in Schritt e- erfassten Fahrzeuggeschwindigkeit ausgewählt wurde.

14. Verfahren nach Anspruch 10, wobei die genannte Vielzahl der Bremsbetätigungssteuerungsmodi mindestens einen Leistungs-Bremsbetätigungssteuerungsmodus und/oder einen Komfort-Bremsbetätigungssteuerungsmodus und/oder einen ABS-Bremsbetätigungssteuerungsmodus und/oder einen geräuschvollen Bremsbetätigungssteuerungsmodus und/oder einen Anhalte-Bremsbetätigungssteuerungsmodus umfasst.

15. Bremssystem (2) eines Fahrzeugs (1), umfassend einen Bremsbetätigungshebel (3),
einen Hebelpositionssensor (4), der dazu ausgelegt ist, mindestens eine aktuelle Hebelposition (s(t)) des genannten Bremsbetätigungshebels (3) zu erfassen,
einen Hebelgeschwindigkeitssensor (5), der dazu ausgelegt ist, mindestens eine aktuelle Hebelgeschwindigkeit (ds(t)/dt) des genannten Bremsbetätigungshebels (3) zu erfassen,
mindestens eine Bremsvorrichtung (6), die jeweils einem Rad (7) des genannten Fahrzeugs (1) zugeordnet ist,
einen Bremsaktuator (8), der operativ mit jeder Bremsvorrichtung (6) verbunden ist und dazu ausgelegt ist, die genannte Bremsvorrichtung (6) zu betätigen,
mindestens eine Steuereinheit (9), die operativ mit dem genannten Hebelpositionssensor (4), dem genannten Hebelgeschwindigkeitssensor (5) und dem genannten Bremsaktuator (8) verbunden ist,
wobei die genannte mindestens eine Steuereinheit (9) dazu ausgelegt ist, die genannte aktuelle Hebelposition (s(t)) und die genannte aktuelle Hebelgeschwindigkeit (ds(t)/dt) während eines Hebelhubs dynamisch, gleichzeitig mit der Erfassung der aktuellen Hebelposition (s(t)) und der Erfassung der aktuellen Hebelgeschwindigkeit (ds(t)/dt) zu mappen,
wobei die genannte mindestens eine Steuereinheit (9) dazu ausgelegt ist, eine Verzögerungskurve in Abhängigkeit von dem genannten dynamischen Mapping zu verarbeiten, mit dem das genannte Fahrzeug (1) verzögert werden soll.

16. Bremssystem (2) nach dem vorangegangenen Anspruch, wobei die genannte mindestens eine Steuereinheit (9) dazu ausgelegt ist, einen Bremsbetätigungsmodus aus einer Vielzahl von Bremsbetätigungsmodi auszuwählen, wobei die genannte mindestens eine Steuereinheit (9) dazu ausgelegt ist, den genannten Bremsaktuator (8) entsprechend dem genannten ausgewählten Bremsbetätigungsmodus zu steuern, und/oder wobei die genannte mindestens eine Steuereinheit (9) dazu ausgelegt ist, einen Bremsbetätigungssteuerungsmodus aus einer Vielzahl von Bremsbetätigungssteuerungsmodi auszuwählen, wobei die genannte mindestens eine Steuereinheit (9) dazu ausgelegt ist, den genannten Bremsaktuator (8) entsprechend dem genannten ausgewählten Bremsbetätigungssteuerungsmodus zu steuern,
und/oder wobei das genannte Bremssystem (2) Folgendes umfasst
- einen Fahrmodus-Wahlschalter (15), der dazu ausgelegt ist, einen Fahrmodus aus einer Vielzahl von Fahrmodi auszuwählen, wobei der genannte Fahrmodus-Wahlschalter (15) operativ mit der genannten mindestens einen Steuereinheit (9) verbunden ist und wobei die genannte mindestens eine Steuereinheit (9) dazu ausgelegt ist, die genannte Verzögerungskurve in Abhängigkeit von dem genannten ausgewählten Fahrmodus zu ändern.

17. Bremssystem (2) nach einem beliebigen der Ansprüche 15 oder 16, umfassend mindestens einen Fahrzeugdynamik-Variablenmesssensor (10) unter folgenden
- einem Raddrehzahlsensor (11) für jedes Rad (7) des genannten Fahrzeugs (1), wobei der genannte Raddrehzahlsensor (11) dazu ausgelegt ist, die Drehzahl des jeweiligen Rades (7) zu erfassen, wobei der genannte Drehzahlsensor (11) operativ mit der genannten mindestens einen Steuereinheit (9) verbunden ist, und/oder
- mindestens einem Reifendrucksensor (12), der dazu ausgelegt ist, einen Reifendruck eines mit dem genannten Rad (7) verbundenen Reifens zu messen, wobei der genannte mindestens eine Reifendrucksensor (12) operativ mit der genannten mindestens einen Steuereinheit (9) verbunden ist, und/oder
- mindestens einem Beschleunigungsmesser (13), der dazu ausgelegt ist, mindestens eine Fahrzeugbeschleunigung zu messen, der das genannte Fahrzeug (1) ausgesetzt ist, wobei der genannte mindestens eine Beschleunigungsmesser (13) operativ mit der genannten mindestens einen Steuereinheit (9) verbunden ist,
- mindestens einem Gyroskop (14), das dazu ausgelegt ist, mindestens eine Winkelgeschwindigkeit des Fahrzeugs zu messen, der das genannte Fahrzeug (1) ausgesetzt ist, wobei das genannte mindestens eine Gyroskop (14) operativ mit der genannten mindestens einen Steuereinheit (9) verbunden ist,
- mindestens einem Fahrzeuggeschwindigkeitssensor (16), der dazu ausgelegt ist, eine aktuelle Fahrzeuggeschwindigkeit zu messen, wobei der genannte Fahrzeuggeschwindigkeitssensor (16) operativ mit der genannten mindestens einen Steuereinheit (9) verbunden ist,
- mindestens einem Näherungssensor (17), der dazu ausgelegt ist, den Abstand zwischen dem Fahrzeug und einem Hindernis zu messen, wobei der genannte mindestens eine Näherungssensor (17) operativ mit der genannten mindestens einen Steuereinheit (9) verbunden ist,
- mindestens einem Feuchtigkeitssensor (18), der operativ mit der genannten mindestens einen Steuereinheit (9) verbunden ist,
- mindestens einem Regensensor (19), der dazu ausgelegt ist, das Vorhandensein von Regen zu erkennen und den Regenfall auf dem Fahrzeug (1) zu messen, wobei der genannte mindestens eine Regensensor (19) operativ mit der genannten mindestens einen Steuereinheit (9) verbunden ist.

18. Bremssystem (2) nach dem vorangegangenen Anspruch, wobei die genannte mindestens eine Steuereinheit (9) dazu ausgelegt ist, eine Schätzung der Fahrzeugdynamik in Abhängigkeit von der genannten mindestens einen Fahrzeugvariablen zu verarbeiten, und/oder wobei die genannte mindestens eine Steuereinheit (9) dazu ausgelegt ist, den genannten Fahrmodus in Abhängigkeit von der genannten mindestens einen Fahrzeugvariablen zu verarbeiten.

19. Bremssystem (2) nach einem beliebigen der Ansprüche 15 bis 18, umfassend mindestens einen Hebelsensor, der mit dem genannten Hebel (3) verknüpft und operativ mit der genannten Steuereinheit (9) verbunden ist, wobei der genannte mindestens eine Hebelsensor unter folgenden gewählt wird:
einem Hebelschaltersensor (20), der dazu ausgelegt ist, den Kontakt eines Benutzers mit dem genannten Hebel (3) zu erkennen, und/oder
einem Hebelhubsensor (21), der dazu ausgelegt ist, den Hub des genannten Hebels (3) zu messen, und/oder einem Hebeldrucksensor (22), der dazu ausgelegt ist, einen Kontaktdruck zu messen, mit dem ein Benutzer den genannten Hebel (3) berührt, und/oder
einem Hebelkraftsensor (), der dazu ausgelegt ist, eine Kraft zu messen, mit der ein Benutzer den genannten Hebel (3) betätigt; und/oder wobei
die genannte Steuereinheit (9) dazu ausgelegt ist, an den genannten mindestens einen Bremsaktuator (8) ein Signal zu senden, das die genannte Verzögerungskurve und/oder den genannten Bremsbetätigungssteuerungsmodus und/oder den genannten Bremsbetätigungsmodus repräsentiert, wobei es sich bei dem genannten Signal um ein Spannungs- und Stromsignal handelt, und/oder wobei der genannte Bremsaktuator (8) eine entsprechende Kalibrierungs- und Steuereinheit umfasst, die dazu ausgelegt ist, das von der genannten Steuereinheit (9) gesendete genannte Signal zu verarbeiten und die genannte Bremsvorrichtung (6) mit einem verarbeiteten Signal zu steuern.

## Revendications

1. Procédé pour contrôler la décélération d'un véhicule (1), dans lequel ledit véhicule (1) comprend un système de freinage (2), dans lequel ledit système de freinage (2) comprend au moins un levier d'actionnement de freinage (3), un actionneur de freinage (8) et au moins un dispositif de freinage (6), dans lequel ledit procédé comprend les étapes suivantes :
a- mesurer la position actuelle du levier (s(t)) dudit levier (3) et la vitesse actuelle du levier (ds(t)/dt) dudit levier (3),
b- cartographier dynamiquement ladite position actuelle du levier (s(t)) et ladite vitesse d'actionnement du levier (ds(t)/dt),
c- traiter une courbe de décélération en fonction de la cartographie dynamique à l'étape b-
d- décélérer ledit véhicule (1) en fonction de ladite courbe de décélération pour chaque position de levier actuelle (s(t)) mesurée dans une course de levier dans laquelle ladite étape b- est effectuée simultanément à l'étape a-.

2. Procédé selon la revendication précédente, dans lequel ledit procédé comprend
e- avant l'étape a-, sélectionner un mode de conduite sélectionné parmi une pluralité de modes de conduite,
et dans lequel l'étape c- comprend la sous-étape :
f- modifier ladite courbe de décélération en fonction du mode de conduite sélectionné à l'étape e-.

3. Procédé selon la revendication précédente, dans lequel ladite pluralité de modes de conduite comprend au moins un mode de stationnement et/ou un mode de conduite routière et/ou un mode de conduite sportive et/ou un mode de conduite normal et/ou un mode de conduite sur neige et/ou un mode de conduite sur glace et/ou un mode de conduite en ville et/ou un mode de conduite sur boue et/ou un mode de conduite sur sable et/ou un mode de conduite personnalisable,
et/ou dans lequel ladite étape e- se produit au moyen d'un sélecteur de mode de conduite (15) dudit véhicule (1) connecté de manière opérationnelle audit système de freinage (2).

4. Procédé selon l'une quelconque des revendications précédentes,
dans lequel ledit procédé comprend les étapes supplémentaires :
g- au moins chevauchant ladite étape a- mesurer au moins une variable du véhicule sélectionnée parmi une pluralité de variables du véhicule,
h- au moins chevauchant ladite étape b-, traiter une estimation de la dynamique du véhicule en fonction de ladite au moins une variable du véhicule mesurée,
et dans lequel l'étape c- comprend la sous-étape :
i- modifier ladite courbe de décélération en fonction de l'estimation de la dynamique du véhicule à l'étape h-.

5. Procédé selon la revendication précédente, dans lequel ladite pluralité de variables de véhicule comprend au moins une variable liée à l'adhérence du véhicule et/ou une variable liée à une pression de gonflage des pneus associée à une roue (7) dudit véhicule (1) et/ou une variable liée à la température dudit système de freinage (2).

6. Procédé selon l'une quelconque des revendications précédentes, dans lequel ledit levier (3) est mobile d'une course maximale entre une position de repos et une position de fin de course, et/ou dans lequel ladite courbe de décélération est une fonction monotone croissante par rapport à ladite position actuelle du levier (s(t)), et/ou dans lequel ladite courbe de décélération comprend un maximum à la position de fin de course du levier.

7. Procédé selon l'une quelconque des revendications précédentes, comprenant les étapes supplémentaires suivantes :
l- parallèlement à l'étape c-, sélectionner un mode d'actionnement de freinage disponible parmi une pluralité de modes d'actionnement de freinage en fonction de la cartographie dynamique de l'étape b-,
m- simultanément à l'étape d-, actionner ledit au moins un dispositif de freinage (6) en fonction dudit mode d'actionnement de freinage sélectionné.

8. Procédé selon la revendication précédente et la revendication 4, dans lequel l'étape l- comprend la sous-étape :
i- modifier ledit mode d'actionnement de freinage sélectionné en fonction de l'estimation de la dynamique du véhicule à l'étape h-.

9. Procédé selon la revendication 7, dans lequel ladite pluralité de modes d'actionnement de freinage comprend au moins un mode d'actionnement de freinage rapide et/ou un mode d'actionnement de freinage lent et/ou un mode de freinage normal et/ou un mode de freinage bruyant et/ou un mode de freinage programmable.

10. Procédé selon la revendication 1, comprenant l'étape supplémentaire :
o- détecter la vitesse du véhicule (Vv),
et dans lequel l'étape c- comprend la sous-étape consistant à p- modifier ladite courbe de décélération en fonction de la vitesse du véhicule détectée à l'étape o-.

11. Procédé selon l'une quelconque des revendications précédentes, comprenant
q- parallèlement à l'étape c-, sélectionner un mode de commande d'actionnement de freinage parmi une pluralité de modes de commande d'actionnement de freinage en fonction de la cartographie dynamique de l'étape b-, et
r- simultanément à l'étape d-, commander ledit au moins un dispositif de freinage (6) en fonction dudit mode de commande d'actionnement de freinage sélectionné

12. Procédé selon la revendication précédente et la revendication 4, dans lequel l'étape q- comprend la sous-étape
s- modifier ledit mode de commande d'actionnement de freinage sélectionné en fonction de l'estimation de la dynamique du véhicule à l'étape h-.

13. Procédé selon la revendication 11 et la revendication 10, dans lequel l'étape q- comprend la sous-étape :
t- modifier ledit mode de commande d'actionnement de freinage sélectionné en fonction de la vitesse du véhicule détectée à l'étape e-.

14. Procédé selon la revendication 10, dans lequel ladite pluralité de modes de commande d'actionnement de freinage comprend au moins un mode de commande d'actionnement de freinage de performance et/ou un mode de commande de freinage de confort et/ou un mode de commande de freinage abs et/ou un mode de commande de freinage bruyant et/ou un mode de commande de freinage de rangement sur le côté.

15. Système de freinage (2) d'un véhicule (1), comprenant un levier d'actionnement de freinage (3),
un capteur de position de levier (4) configuré pour détecter au moins une position de levier actuelle (s(t)) dudit levier d'actionnement de freinage (3),
un capteur de vitesse de levier (5) configuré pour détecter au moins une vitesse de levier actuelle (ds(t)/dt) dudit levier d'actionnement de freinage (3),
au moins un dispositif de freinage (6) associé à une roue respective (7) dudit véhicule (1),
un actionneur de freinage (8) connecté de manière opérationnelle à chaque dispositif de freinage (6) et configuré pour actionner ledit dispositif de freinage (6), au moins une unité de commande (9) connectée de manière opérationnelle audit capteur de position de levier (4), audit capteur de vitesse de levier (5) et audit actionneur de freinage (8),
dans lequel ladite au moins une unité de commande (9) est configurée pour cartographier dynamiquement ladite position de levier actuelle (s(t)) et ladite vitesse de levier actuelle (ds(t)/dt) dans une course de levier, simultanément à la détection de la position de levier actuelle (s(t)) et à la détection de la vitesse de levier actuelle (ds(t)/dt),
dans lequel ladite au moins une unité de commande (9) est configurée pour traiter une courbe de décélération en fonction de ladite cartographie dynamique avec laquelle ledit véhicule (1) doit être décéléré.

16. Système de freinage (2) selon la revendication précédente, dans lequel ladite au moins une unité de commande (9) est configurée pour sélectionner un mode d'actionnement de freinage parmi une pluralité de modes d'actionnement de freinage, dans lequel ladite au moins une unité de commande (9) est configurée pour commander ledit actionneur de freinage (8) selon ledit mode d'actionnement de freinage sélectionné,
et/ou dans lequel ladite au moins une unité de commande (9) est configurée pour sélectionner un mode de commande d'actionnement de freinage parmi une pluralité de modes de commande d'actionnement de freinage, dans lequel ladite au moins une unité de commande (9) est configurée pour commander ledit actionneur de freinage (8) en fonction dudit mode de commande d'actionnement de freinage sélectionné,
et/ou dans lequel ledit système de freinage (2) comprend
- un sélecteur de mode de conduite (15) configuré pour sélectionner un mode de conduite parmi une pluralité de modes de conduite, dans lequel ledit sélecteur de mode de conduite (15) est associé de manière opérationnelle à ladite au moins une unité de commande (9), et dans lequel ladite au moins une unité de commande (9) est configurée pour modifier ladite courbe de décélération en fonction dudit mode de conduite sélectionné.

17. Système de freinage (2) selon l'une quelconque des revendications 15 à 16, comprenant au moins un capteur de mesure variable de la dynamique du véhicule (10) compris entre
- un capteur de vitesse de roue (11) pour chaque roue (7) dudit véhicule (1), dans lequel ledit capteur de vitesse de roue (11) est configuré pour détecter la vitesse de rotation de la roue correspondante (7), dans lequel ledit capteur de vitesse (11) est associé de manière opérationnelle à ladite au moins une unité de commande (9), et/ou
- au moins un capteur de pression de pneu (12) configuré pour mesurer une pression de gonflage d'un pneu associé à ladite roue (7), dans lequel ledit au moins un capteur de pression de pneu (12) est associé de manière opérationnelle à ladite au moins une unité de commande (9), et/ou
- au moins un accéléromètre (13) configuré pour mesurer au moins une accélération du véhicule à laquelle ledit véhicule (1) est soumis, dans lequel ledit au moins un accéléromètre (13) est associé de manière opérationnelle à ladite au moins une unité de commande (9),
- au moins un gyroscope (14) configuré pour mesurer au moins une vitesse angulaire du véhicule à laquelle ledit véhicule (1) est soumis, dans lequel ledit au moins un gyroscope (14) est associé de manière opérationnelle à ladite au moins une unité de commande (9),
- au moins un capteur de vitesse du véhicule (16) configuré pour mesurer une vitesse actuelle du véhicule, dans lequel ledit capteur de vitesse du véhicule (16) est associé de manière opérationnelle à ladite au moins une unité de commande (9),
- au moins un capteur de proximité (17) configuré pour mesurer la distance entre le véhicule et un obstacle, dans lequel ledit au moins un capteur de proximité (17) est associé de manière opérationnelle à ladite au moins une unité de commande (9),
- au moins un capteur de détection d'humidité (18) connecté de manière opérationnelle à ladite au moins une unité de commande (9),
- au moins un capteur de pluie (19) configuré pour détecter la présence et mesurer la quantité de pluie incidente sur le véhicule (1), dans lequel ledit au moins un capteur de pluie (19) est associé de manière opérationnelle à ladite au moins une unité de commande (9).

18. Système de freinage (2) selon la revendication précédente, dans lequel ladite au moins une unité de commande (9) est configurée pour traiter une estimation de la dynamique du véhicule en fonction de ladite au moins une variable du véhicule, et/ou dans lequel
ladite au moins une unité de commande (9) est configurée pour traiter ledit mode de conduite en fonction de ladite au moins une variable de véhicule.

19. Système de freinage (2) selon l'une quelconque des revendications 15 à 18, comprenant au moins un capteur de levier associé audit levier (3) et connecté de manière opérationnelle à ladite unité de commande (9), dans lequel ledit au moins un capteur de levier est sélectionné parmi :
un capteur de commutateur à levier (20) configuré pour détecter un contact d'un utilisateur avec ledit levier (3), et/ou
un capteur de course de levier (21) configuré pour mesurer une course dudit levier (3), et/ou
un capteur de pression de levier (22) configuré pour mesurer une pression de contact avec laquelle un utilisateur entre en contact avec ledit levier (3), et/ou un capteur de force de levier () configuré pour mesurer une force avec laquelle un utilisateur actionne ledit levier (3) ; et/ou dans lequel
ladite unité de commande (9) est configurée pour envoyer, audit au moins un actionneur de freinage (8), un signal représentant ladite courbe de décélération et/ou ledit mode de commande d'actionnement de freinage et/ou ledit mode d'actionnement de freinage, dans lequel ledit signal est un signal de tension et de courant, et/ou dans lequel ledit actionneur de freinage (8) comprend une unité d'étalonnage et de commande respective configurée pour traiter ledit signal envoyé par ladite unité de commande (9) et pour commander ledit dispositif de freinage (6) avec un signal traité.
